# EUROPÄISCHE PATENTSCHRIFT

(11) **EP 1 258 660 B1**
(45) Veröffentlichungstag und Bekanntmachung des Hinweises auf die Patenterteilung: **22.11.2006**
(21) Anmeldenummer: 02008355.6
(22) Anmeldetag: 12.04.2002
(51) Int. Cl.: F16H 63/38

(54) **Schaltvorrichtung eines Schaltgetriebes**
Shift device of a change gear transmission
Dispositif de changement de vitesses de transmission

(30) Priorität: 17.05.2001 DE 10124201
(43) Veröffentlichungstag der Anmeldung: 20.11.2002
(73) Patentinhaber: Schaeffler KG, 91074 Herzogenaurach (DE)
(72) Erfinder: Döppling, Horst, 91074 Herzogenaurach (DE); Maier, Waldemar, 91074 Herzogenaurach (DE); Schübel, Rainer, 91589 Aurach (DE); Werner, Stefan, 91413 Neustadt (DE); Kuhm, Didier, 67170 Brumath (FR)

(56) Entgegenhaltungen:
- DE-A- 10 051 352
- DE-A- 19 919 271
- DE-C1- 19 580 804
- FR-A- 1 196 085
- US-A- 4 608 877
- PATENT ABSTRACTS OF JAPAN vol. 1998, no. 02, 30. Januar 1998 (1998-01-30) -& JP 09 264424 A (MAZDA MOTOR CORP), 7. Oktober 1997 (1997-10-07)
- PATENT ABSTRACTS OF JAPAN Bd. 1998, Nr. 13, 30. November 1998 (1998-11-30) & JP 10 220577 A (SUZUKI MOTOR CORP; KOORITSU), 21. August 1998 (1998-08-21)
- PATENT ABSTRACTS OF JAPAN Bd. 2000, Nr. 09, 13. Oktober 2000 (2000-10-13) & JP 2000 154870 A (FUJI KIKO CO LTD), 6. Juni 2000 (2000-06-06)

## Beschreibung

### Gebiet der Erfindung

Die Erfindung betrifft eine Schaltvorrichtung eines Schaltgetriebes mit einem beweglich gelagerten Schaltelement und mit einem Schaltmaul für den Eingriff eines das Schaltelement bewegenden Betätigungselementes sowie mit zumindest einer Rastkontur, wobei das Schaltmaul an einer Basis aus Flachmaterial gebildet ist und die Rastkontur wenigstens eine Rastvertiefung für den Eingriff eines Rastelementes aufweist.

### Hintergrund der Erfindung

Derartige Schaltvorrichtungen gibt es in den verschiedensten Ausführungen in Fahrzeuggetrieben. So offenbart die JP 09264424 eine Schaltanordnung, bei der über ein Schaltgestänge mittels eines Drehgelenks eine Schaltwelle verschiebbar ist. Die Schaltwelle weist einen mit ihr verbundenen Schaltfinger auf, über den mittels Kulissen Schaltstangen in Eingriff gebracht werden können, welche wiederum Schaltgabeln bewegen. Dabei liegen viele Einzelteile vor, und sämtliche Bauteile sind massiv hergestellt, wodurch sie nur aufwändig hergestellt werden können.

Die DE 195 80 804 C1 offenbart eine Rastierhülse in Form eines Topfteils, welche auf eine Schaltwelle aufgepresst ist und in axialer Richtung mehrere nebeneinander angeordnete Rastausnehmungen aufweist.

Ferner ist aus der US 4 608 877 bekannt, ein Schaltmaul mit einem Vorsprung zu versehen, der einer federbelasteten Kugel einen hohen Widerstand entgegensetzt, um Missbrauch der Schaltung oder ungewolltes Schalten in einen sehr niedrigen Gang zu verhindern. Schaltmäuler können auch , wie in JP 10 220577 A, die alle Merkmale des Oberbegriffes des unabhängigen Anspruchs 1 offenbart, oder JP 2000 154870 A dargestellt, mit geringem Aufwand spanlos hergestellt werden.

Die Gestaltung und die Funktion von Schaltelementen dieser Vorrichtungen sind in dem Fachbuch "Zahnradgetriebe" dritte Auflage von Johannes Loomann auf den Seiten 153-156 beschrieben. Auf den Seiten 175ff dieses Buches sind dann Beispiele aufgeführt, wie derartige Schaltelemente in bisher verwirklichter Schaltvorrichtungen angeordnet sind. Die Schaltelemente sind zum Beispiel zum Getriebe längs verschiebbare und/oder schwenkbare Schaltwellen bzw. Schaltstangen. Weiterhin gibt es feststehende Schaltschienen. An den Schaltstangen und Schaltwellen sitzen weitere Schaltelemente, wie Schaltgabeln für den Eingriff in Schaltkupplungen zum drehfesten Kuppeln von Gangrädern mit ihrem Antrieb. Auf den Schaltschienen sitzen oftmals auch verschiebbare Schaltgabeln. Ein oder mehrere Betätigungselemente verschieben und verdrehen die Schaltelemente während der Schaltvorgänge und greifen dazu in ein Schaltmaul. Die Betätigungselemente sind zum Beispiel Schaltfinger. Das Schaltmaul ist an einer Basis aus Flachmaterial ausgebildet, wobei die Basis in ein gabelförmig ausgebildetes Ende mit dem Schaltmaul ausläuft und die Basis an dem Schaltelement befestigt oder einstückig mit diesem ausgebildet ist. Die Rastkonturen mit Rastvertiefungen für den Eingriff der Rastbolzen von Arretierelementen sind zumeist direkt an den Schaltelementen, wie zum Beispiel an der Schaltwelle oder Schaltschiene, ausgebildet. Diese Rastkonturen, die durch einen Wechsel von Vertiefungen und sich den Vertiefungen anschließenden Rampen gebildet sind, werden in das Schaltelement spanabhebend oder zunehmend durch Prägen und andere Umformverfahren eingebracht. Für den Kontakt mit den Rastbolzen oder mit einer Kugel an dem Rastbolzen sind die Rastkonturen gehärtet. Die beschriebenen Schaltelemente des Standes der Technik werden deshalb entweder als Ganzes oder lokal an der Rastkontur zum Beispiel mittels eines Induktiv-Härteverfahrens gehärtet. Der Aufwand und damit die Kosten für das Härten sind entsprechend hoch.

### Zusammenfassung der Erfindung

Die Aufgabe der Erfindung ist daher, eine Schaltvorrichtung zu schaffen, mit der der vorgenannte Nachteil vermieden wird.

Diese Aufgabe ist nach dem Gegenstand des Anspruches 1 dadurch gelöst, dass die Rastkontur an der Basis des Schaltmaules ausgebildet ist. Die Basis mit dem Schaltmaul ist vorzugsweise als ein Stanzteil ausgeführt. Die Rastkontur wird entweder während des Stanzprozesses in die Basis eingebracht oder wird von dem Stanzprozess getrennt vor oder nach diesem in die Basis eingebracht. Die Basis liegt als Einzelteil vor. Für das Härten der Rastkontur und für den Eingriff des Schaltfingers in das Schaltmaul muss nur die Basis gehärtet werden. Ein Härten der Schaltwelle Schaltstange usw. ist unter Umständen nicht mehr nötig. Damit ist der Aufwand und sind die Kosten für die Herstellung einer erfindungsgemäßen Schaltvorrichtung reduziert. Die Lage des Schaltmaules zu der Rastkontur ist genauer vorbestimmbar, da beide Elemente an der gleichen Basis befestigt sind.

Eine weitere Ausgestaltung der Erfindung sieht vor, dass die von dem Schaltelement auslegerartig abstehende Basis mittels einer Nabe auf dem Schaltelement befestigt ist. Denkbar ist aber auch, dass das Flachmaterial der Basis unmittelbar auf das Schaltelement aufgesetzt und mit diesem verschraubt, vernietet oder verschweißt ist. Schließlich ist mit weiteren Ausgestaltungen der Erfindung vorgesehen, dass das Schaltelement eine um ihre Längsmittelachse schwenkbare und/oder entlang ihrer Längsmittelachse verschiebbare Schaltwelle ist. Als Schaltelemente sind aber auch alle anderen im vorhergehenden Beschreibungsteil dieser Schrift aufgeführten Schaltelemente geeignet.

### Kurze Beschreibung der Zeichnungen

Die Erfindung wird nachfolgend anhand eines Ausführungsbeispieles näher erläutert. Es zeigen
- Figur 1: ein Ausführungsbeispiel einer erfindungsgemäßen Schaltvorrichtung eines Schaltgetriebes einer beweglich gelagerten Schaltstange und einem Schaltmaul für den Eingriff eines Schaltfingers und
- Figur 2: die Rastkontur an der Basis des Schaltmaules aus Figur 1 im Schnitt entlang der Linie II - II.

### Detaillierte Beschreibung der Zeichnungen

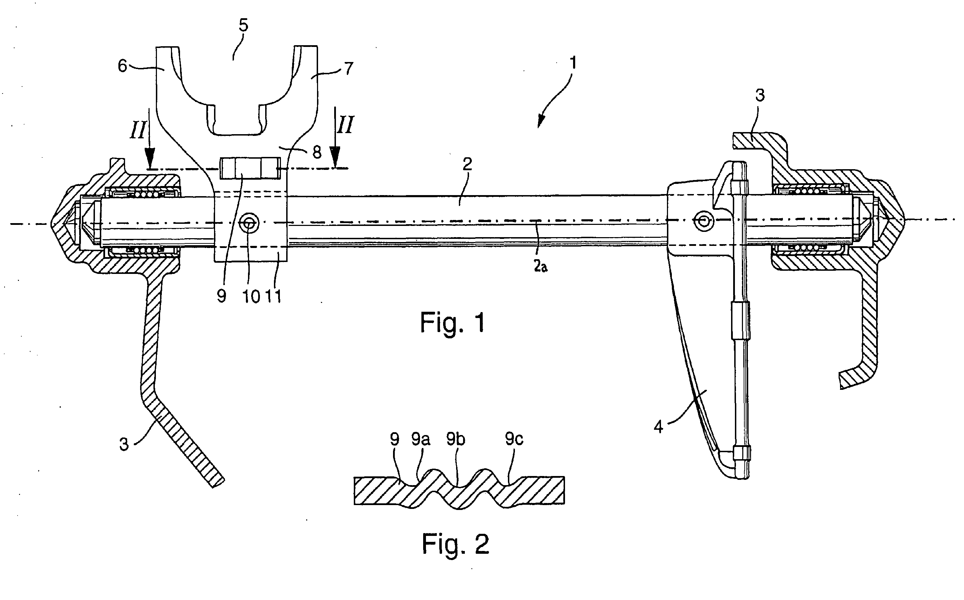

Figur 1 zeigt ein Ausführungsbeispiel einer erfindungsgemäßen Schaltvorrichtung 1. Das Schaltelement, eine Schaltwelle 2 der Schaltvorrichtung 1 ist um seine Längsmittelachse 2a drehbar und entlang seiner Längsmittelachse 2a längsverschiebbar in einem nur angedeutet dargestellten Gehäuse 3 des Schaltgetriebes gelagert. An der Schaltwelle 2 ist eine Schaltgabel 4 befestigt. Ein Schaltmaul 5 ist zwischen zwei Anschlägen 6 und 7 an einer gabelförmig auslaufenden Basis 8 ausgebildet. In die Basis 8 ist außerdem eine Rastkontur 9 eingeformt. Die Rastkontur 9 weist Rastvertiefungen 9a, 9b sowie 9c auf und ist in das flache Profil der Basis 8 eingeprägt (Figur 2). Die Basis 8 mit dem Schaltmaul 5 ist mit einer Nabe 11 einteilig verbunden und an der Nabe 11 mittels eines Stiftes 10 auf der Schaltwelle 2 gesichert.

### Bezugszahlenliste

- 1: Schaltvorrichtung
- 2: Schaltwelle
- 2a: Längsmittelachse
- 3: Gehäuse
- 4: Schaltgabel
- 5: Schaltmaul
- 6: Anschlag
- 7: Anschlag
- 8: Basis
- 9: Rastkontur
- 9a: Rastvertiefung
- 9b: Rastvertiefung
- 9c: Rastvertiefung
- 10: Stift
- 11: Nabe

## Patentansprüche

1. Schaltvorrichtung eines Getriebes mit einer Schaltwelle (2), einer Schaltstange oder einer Schaltschiene als beweglich gelagertem Schaltelement, wobei am Schaltelement eine Schaltgabel befestigt ist, und einem Schaltmaul (5), das auf dem Schaltelement mit seiner Basis (8), als Einzelteil ausgebildet, fixiert ist, für den Eingriff eines das Schaltelement bewegenden Betätigungselementes sowie mit wenigstens einer Rastkontur (9), wobei die Basis (8) aus Flachmaterial gebildet ist und die Rastkontur (9) wenigstens eine Rastvertiefung (9a, 9b, 9c) für den Eingriff eines Rastelementes aufweist, **dadurch gekennzeichnet, dass** die Rastkontur (9) an der Basis (8) ausgebildet ist.

2. Schaltvorrichtung nach Anspruch 1, **dadurch gekennzeichnet, dass** die Rastkontur (9) durch zumindest eine Prägung an der Basis (8) ausgebildet ist.

3. Schaltvorrichtung nach Anspruch 1, **dadurch gekennzeichnet, dass** die Basis (8) mit einer Nabe (11) auf dem Schaltelement befestigt ist.

4. Schaltvorrichtung nach Anspruch 1, **dadurch gekennzeichnet, dass** das Schaltelement eine um ihre Längsmittelachse schwenkbare Schaltwelle (2) ist.

5. Schaltvorrichtung nach Anspruch 1, **dadurch gekennzeichnet, dass** das Schaltelement eine um ihre Längsmittelachse schwenkbare sowie entlang ihrer Längsmittelachse verschiebbare Schaltwelle (2) ist.

## Claims

1. Gear shifting device of a transmission comprising a gearshift shaft (2), a gearshift rod or a gearshift rail as a displaceably mounted gearshift element on which a gearshift fork is fixed, said device further comprising a gearshift jaw (5) that is made as a separate part with its base (8) and is fixed on the gearshift element for the engagement of an actuating element that displaces the gearshift element and said device also comprising at least one catch contour (9), said base (8) being made out of flat material and the catch contour (9) comprising at least one catch depression (9a, 9b, 9c) for the engagement of a detent element, **characterised in that** the catch contour (9) is configured on the base (8).

2. Gear shifting device according to claim 1, **characterised in that** the catch contour (9) is formed by at least one stamping on the base (8).

3. Gear shifting device according to claim 1, **characterised in that** the base is fixed by means of a hub (11) on the gearshift element.

4. Gear shifting device according to claim 1, **characterised in that** the gearshift element is a gearshift shaft (2) that can pivot about its central longitudinal axis.

5. Gear shifting device according to claim 1, **characterised in that** the gearshift element is a gearshift shaft (2) that can pivot about its central longitudinal axis and can be displaced along its central longitudinal axis.

## Revendications

1. Dispositif de changement de vitesse d'une boîte de changement de vitesse, ledit dispositif de changement de vitesse comprenant un arbre de change de changement de vitesse (2), une tringle de changement de vitesse ou une réglette de changement de vitesse en tant qu'élément de changement de vitesse monté en déplacement et sur lequel est fixée une fourchette de changement de vitesse, ledit dispositif comprenant, en plus, une mâchoire de changement de vitesse (5) qui est formée sous la forme d'une pièce séparée avec sa base (8) et est fixée sur l'élément de changement de vitesse pour l'engagement d'un élément d'actionnement qui déplace l'élément de changement de vitesse, et ledit dispositif comprenant encore, au moins, un contour d'arrêt (9), la base (8) étant fabriquée en matériau plat, et le contour d'arrêt (9) comprenant, au moins, une cavité d'arrêt (9a, 9b, 9c) pour l'engagement d'un élément d'arrêt, **caractérisé en ce que** le contour d'arrêt (9) est configuré sur la base (8).

2. Dispositif de changement de vitesse selon la revendication 1, **caractérisé en ce que** le contour d'arrêt (9) est formé par au moins un estampage sur la base (8).

3. Dispositif de changement de vitesse selon la revendication 1, **caractérisé en ce que** la base (8) est fixée avec un moyeu (11) sur l'élément de changement de vitesse.

4. Dispositif de changement de vitesse selon la revendication 1, **caractérisé en ce que** l'élément de changement de vitesse est un arbre de changement de vitesse (2) qui peut pivoter autour de son axe longitudinal central.

5. Dispositif de changement de vitesse selon la revendication, **caractérisé en ce que** l'élément de changement de vitesse est un arbre de changement de vitesse (2) qui peut pivoter autour de son axe longitudinal central en étant déplaçable le long de son axe longitudinal central.
